# EUROPÄISCHE PATENTANMELDUNG

(11) **EP 0 950 907 A2**
(43) Veröffentlichungstag der Anmeldung: **20.10.1999**
(21) Anmeldenummer: 99400699.7
(22) Anmeldetag: 19.03.1999
(51) Int. Cl.: G02B 6/44

(54) **Verfahren zur Herstellung eines optischen Kabels**

(30) Priorität: 17.04.1998 DE 19816998
(71) Anmelder: ALCATEL, 75008 Paris (FR)
(72) Erfinder: Staschewski, Harry, Dipl.-Ing., 30853 Langenhagen (DE)
(74) Vertreter: Döring, Roger, Dipl.-Ing.

(57) **Zusammenfassung**

Bei einem Verfahren zur Herstellung eines optischen Kabels bestehend aus einem Metallrohr (13), in welchem zumindest ein Lichtwellenleiter (9) angeordnet ist, wird ein von einer Vorratsspule abgezogenes Metallband (5) allmählich zu einem Schlitzrohr geformt. Der von einer weiteren Vorratsspule abgezogene Lichtwellenleiter wird in das noch offene Schlitzrohr eingeführt, der Längsschlitz des Schlitzrohres verschweißt und das geschweißte Rohr in seinem Durchmesser reduziert. Das Metallrohr wird zumindest nach der Reduktion elastisch gedehnt. Dabei wird das Rohr in zumindest zwei Stufen in seinem Durchmesser reduziert, wobei bei der letzten Stufe der Wert der Reduktion am größten ist.

## Beschreibung

Die Erfindung betrifft ein Verfahren zur Herstellung eines optischen Kabels nach dem Oberbegriff des Anspruchs 1.

Aus der DE 44 34 133 A ist ein Verfahren zur Herstellung eines optischen Kabels aus einem Metallrohr bekannt, bei den ein Metallband in kontinuierlicher Arbeitsweise zu einem Schlitzrohr geformt und der Längsschlitz verschweißt wird. In das noch offene Schlitzrohr werden ein oder mehrere Lichtwellenleiter sowie eine zähflüssige Paste z. B. Petroleumjelly zum Längsabdichten des Rohres eingeführt. Nach dem Verschweißen wird das Rohr in seinem Außendurchmesser reduziert.

Die Abmessungen solcher Metallröhrchen sind abhängig von der Kabelkonstruktion, in welcher die Metallröhrchen eingesetzt werden.

Der Durchmesser des zu schweißenden Rohres ist wegen der im Schweißbereich in dem Schlitzrohr befindlichen Aggregate, wie Lichtwellenleiter-Führungsrohr, Jelly-Füllrohr und Kühl- und Schutzgaskanal abhängig von der Anzahl und dem Außendurchmesser der Lichtwellenleiter, die im Lichtwellenleiter-Führungsrohr untergebracht werden müssen.

Die Schlußfolgerung,daß man nur ein möglichst.großes Rohr.fertigen muß, um durch eine oder mehrere Reduktionen des Rohres eine sehr große Erhöhung der Produktionsgeschwindigkeit bei gleicher Schweißgeschwindigkeit erreichen zu können, ist nur bedingt richtig.

Grenzen hierfür sind gesetzt
a) durch die Verringerung der elastischen Dehnung nach den Reduktionen des Rohres und damit erzielbaren Überlänge des Lichtwellenleiters in der Dehnvorrichtung
b) durch die materialspezifische maximale Reduktion pro Ziehvorgang und die Aushärtung des Rohrmaterials beim Reduzieren
c) durch die zulässigen Ziehkräfte der Abzugsvorrichtung.

Der vorliegenden Erfindung liegt die Aufgabe zugrunde, das bekannte Verfahren dahingehend zu verbessern, daß zum einen eine höhere Fertigungsgeschwindigkeit erreichbar ist, wobei die Abmessungen des Rohres im Schweißzustand gleich bleiben, d. h. ein Werkzeugwechsel nicht erfordelrich ist, daß die Anzahl der Lichtwellenleiter variabel ist und daß die Überlänge nahezu beliebig einstellbar ist.

Diese Aufgabe wird durch die im Kennzeichen des Anspruchs 1 erfaßten Merkmale gelöst.

Der wesentliche Vorteil der Erfindung ist darin zu sehen, daß Überlängen der Lichtwellenleiter von 3 ‰ bis zu 5 % eingestellt werden können, ohne daß wesentliche Umbauten an der Fertigungsanlage vorgenommen werden müssen. Im Normalfall reicht es aus, die Ziehmatrizen bzw. Türkenköpfe auszutauschen.

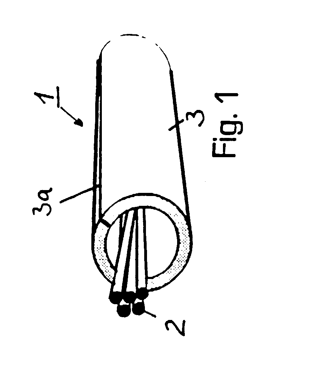

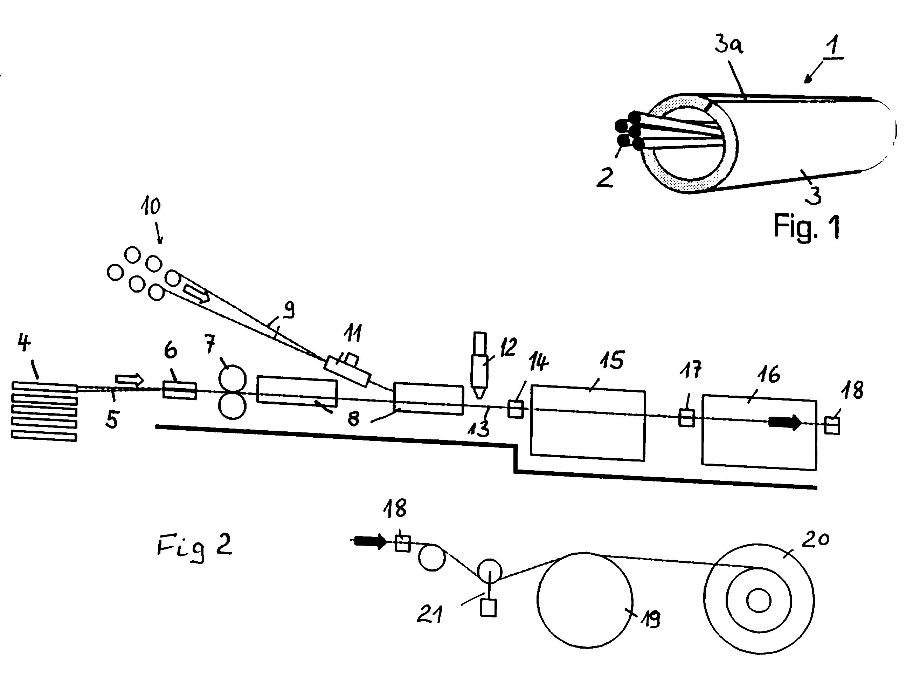

Die Erfindung ist anhand der in den Figuren 1 bis 3 schematisch dargestellten Ausführungsbeispiele näher erläutert.

Die Fig. 1 zeigt eine perspektivische Ansicht eines Teils eines nach der Lehre der Erfindung hergestellten optischen Kabels. Das optische Kabel 1 besteht aus den Lichtwellenleitern 2 und dem die Lichtwellenleiter 2 umgebenden Metallrohr 3, welches eine Längsschweißnaht 3a aufweist. Der Freiraum zwischen den Lichtwellenleitern 2 und dem Metallrohr 3 kann mit einem sogenannten Petroleumjelly ausgefüllt sein, um eine Längswasserwanderung zu verhindern. Die Lichtwellenleiter 2 haben eine größere Länge als das Metallrohr 3, verlaufen also wellen-, wendel- oder sinusförmig in dem Metallrohr 3.

Fig. 2 zeigt eine seitliche Ansicht einer Fertigungsvorrichtung. Dort ist mit 4 ein Bandvorrat bezeichnet, von dem ein Metallband 5 vorzugsweise ein Band aus nichtrostendem Stahl kontinuierlich abgezogen wird. Mittels einer Bandbremse 6 wird das Band 5 abgebremst. Eine Besäumschere 7 besäumt das Metallband 5 an seinen Längskanten, so daß zum einen stets eine gleiche Bandbreite zum anderen metallisch reine Bandkanten vorliegen. In einer Formvorrichtung 8 wird das Metallband 5 allmählich zum Schlitzrohr geformt. In das noch offene Schlitzrohr werden Lichtwellenleiter 9, die von Vorratsspulen 10 abgezogen werden, eingeführt. Mit 11 ist eine, Füllvorrichtung bezeichnet, die ein Petroleumjelly in das Schlitzrohr einfüllt. Das Schlitzrohr wird mittels eines Laserschweißkopfes 12 an seinen Bandkanten verschweißt, und das geschweißte Rohr 13 mittels einer Reduziereinrichtung 14 beispielsweise einer Ziehmatrize bzw. eines sog. Türkenkopfes in seinem Durchmesser reduziert. Um die Kräfte aufzubringen, die für das Abziehen und Formen des Metallbandes 5 sowie das Herunterziehen des Metallrohres 13 notwendigen Kräfte werden mittels eines Spannzangenabzuges 15 aufgebracht. Hinter dem Spannzangenabzug 15 ist ein weiterer Spannzangenabzug 16 angeordnet. Zwischen den Spannzangenabzügen 15 und 16 ist eine zweite Reduziereinrichtung 17 vorgesehen, die entweder eine Ziehmatrize oder ein Türkenkopf sein kann.

Hinter dem Spannzangenabzug 16 ist eine dritte Reduziereinrichtung 18 angeordnet. Die Abzugskraft für das Rohr hinter der dritten Matrize 18 bzw. dem dritten Türkenkopf wird durch einen Scheibenabzug 19 aufgebracht, um den das Rohr in mehreren Windungen herumgelegt ist. Das von dem Scheibenabzug 19 ablaufende Rohr wird auf einen Aufwickler 20 aufgewickelt.

Die Überlänge der Lichtwellenleiter 9 in dem Metallrohr 13 wird nun dadurch erzeugt, daß das Metallrohr 13 zwischen der Reduziereinrichtung 18 und dem Scheibenabzug 19 elastisch gedehnt wird. Hierzu wird in einfacher Weise an das Metallrohr 13 z. B. ein Gewicht 21 gehängt. Die elastische Dehnung wird auf dem Scheibenabzug 20 aufgehoben. Da die Lichtwellenleiter 9 mit der gleichen Geschwindigkeit wie das elastisch gedehnte Metallrohr 13 abgezogen werden, ergibt sich bei Aufhebung der elastischen Dehnung eine Überlänge der Lichtwellenleiter 9 in dem Metallrohr 13, die abhängig ist von der Größe des Gewichts 21.

Die Abzugsgeschwindigkeit der Spannzangenabzüge 15 und 16 sowie des Scheibenabzugs 19 wird durch sogenannte nicht dargestellte Tänzereinrichtungen geregelt.

Wesentlich für die Erfindung ist, daß die Reduktion des Metallrohres 13 in der letzten Ziehstufe, d. h. bei der dritten Reduzierstufe 18 am größten ist, um eine möglichst hohe elastische Dehnung zu erzielen.

Vorzugsweise ist die prozentuale Reduktion des Metallrohres 13 in der dritten Reduzierstufe 18 größer als die Summe der prozentualen Reduktionen des Metallrohres 13 in der ersten und zweiten Reduziereinrichtung 14 und 17.

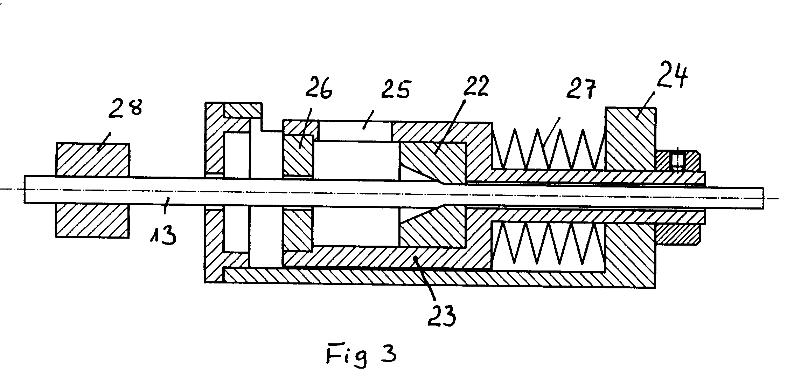

Fig. 3 zeigt eine besonders vorteilhafte Ausgestaltung der Reduzierstufen 14, 17 und 18.

Der Ziehstein bzw. die Matrize 22 ist in einer Halterung 23 angeordnet, die wiederum in einer Ziehsteinaufnahme 24 längsverschieblich gelagert ist. Am Eingang der Halterung 23 befindet sich eine Rohrführung 26. Des weiteren ist in der Halterung 23 eine Öffnung 25 vorgesehen, in welche Ziehöl in die Halterung 23 einfüllbar ist.

Die Halterung 23 ist in der Ziehsteinaufnahme 24 über Tellerfedern 27 federnd gelagert. Die Tellerfedern 27 werden vorgespannt, wenn das Metallrohr 13 gezogen wird.

Mit 28 ist noch eine Tänzereinrichtung bezeichnet, welche die Abzugsgeschwindigkeit des Spannzangenabzuges regelt.

Der Vorteil der federnden Lagerung der Halterung 23 in der Ziehsteinaufnahme 24 besteht darin, daß bei einer Unterbrechung der Fertigung nach dem Zurücksetzen des Metallrohres 13 durch die Spannzangenabzüge zum Uberschweißen der Schweißnaht des Metallrohres 13 ein stoßartiges Einsetzen des Ziehvorganges an den Reduzierstufen vermieden wird.

Es versteht sich von selbst, daß in jeder Reduzierstufe wahlweise eine Ziehmatrize oder ein Türkenkopf eingesetzt werden kann.

## Patentansprüche

1. Verfahren zur Herstellung eines optischen Kabels bestehend aus einem Metallrohr, in welchem zumindest ein Lichtwellenleiter angeordnet ist, bei welchem ein von einer Vorratsspule abgezogenes Metallband allmählich zu einem Schlitzrohr geformt wird, der von einer weiteren Vorratsspule abgezogene Lichtwellenleiter in das noch offene Schlitzrohr eingeführt wird, der Längsschlitz des Schlitzrohres verschweißt wird und das geschweißte Rohr in seinem Durchmesser reduziert und das Metallrohr zumindest nach der Reduktion elastisch gedehnt wird, **dadurch gekennzeichnet**, daß das Rohr in zumindest zwei Stufen in seinem Durchmesser reduziert wird und daß bei der letzten Stufe der Wert der Reduktion am größten ist.

2. Verfahren nach Anspruch 1, **dadurch gekennzeichnet**, daß das Maß der Reduktion in der letzten Stufe um mindestens 10 % größer ist als in jeder der vorigen Stufen.

3. Verfahren nach Anspruch 1 oder 2, bei dem das Metallrohr nach der letzten Stufe auf eine Abzugsscheibe aufgewickelt wird, **dadurch gekennzeichnet**, daß zwischen den beiden Stufen ein Spannzangenabzug an dem Rohr angreift.

4. Verfahren nach einem der Ansprüche 1 bis 3, **dadurch gekennzeichnet**, daß das Metallrohr in drei Stufen im Durchmesser reduziert wird, daß die erste Stufe zwischen der Schweißstelle und einem ersten an dem Rohr angreifenden Spannzangenabzug, daß die zweite Stufe zwischen dem ersten Spannzangenabzug und einem zweiten an dem Rohr angreifenden Spannzangenabzug und die dritte Stufe zwischen dem zweiten Spannzangenabzug und der Abzugsscheibe gelegen ist.

5. Verfahren nach einem der Ansprüche 1 bis 4, **dadurch gekennzeichnet**, daß die Durchlaufgeschwindigkeit des Metallrohres zwischen dem ersten und dem zweiten Spannzangenabzug durch Änderung der Abzugsgeschwindigkeit des ersten und/oder zweiten Spannzangenabzugs mittels einer Tänzereinrichtung geregelt wird.

6. Verfahren nach einem der Ansprüche 1 bis 5, **dadurch gekennzeichnet**, daß die Reduktion des Durchmessers in jeder Stufe durch je eine Ziehmatrize erfolgt.

7. Verfahren nach einem der Ansprüche 1 bis 5, **dadurch gekennzeichnet**, daß die Reduktion des Durchmessers in jeder Stufe durch einen Türkenkopf erfolgt.

8. Vorrichtung zur Durchführung des Verfahrens bestehend aus einer Vorratsspule (4), von der ein Metallband (5) abziehbar ist, einer das Metallband (5) allmählich zum Rohr mit Längsschlitz formenden Formeinrichtung (8), einer den Längsschlitz verschließenden Schweißeinrichtung (12) zumindest einer Vorratsspule (10), von welcher die Lichtwellenleiter (9) abziehbar sind sowie einer Führungsvorrichtung, welche die Lichtwellenleiter (9) in das noch offene Schlitzrohr einführt, zumindest eine das Rohr (13) im Durchmesser reduzierenden Ziehmatrize (22) und einer hinter der Ziehmatrize (22) angeordneten Abzugsvorrichtung (15,16,19), **dadurch gekennzeichnet**, daß die Ziehmatrize (22) in einer Ziehsteinaufnahme (24) federbelastet gelagert ist.

9. Vorrichtung nach Anspruch 8, **dadurch gekennzeichnet**, daß die Ziehmatrize (22) gemeinsam mit einer Rohrführung (26) in einer Matrizenhalterung (23) angeordnet ist.

10. Vorichtung nach Anspruch 8 oder 9, **dadurch gekennzeichnet**, daß die Matrize (22) mittels Tellerfedern (27) in der Ziehsteinaufnahme (24) gelagert ist.
